# EUROPÄISCHE PATENTSCHRIFT

(11) **EP 3 310 711 B1**
(45) Veröffentlichungstag und Bekanntmachung des Hinweises auf die Patenterteilung: **23.09.2020**
(21) Anmeldenummer: 16729521.1
(22) Anmeldetag: 08.06.2016
(51) Int. Cl.: C01C 3/10

(54) **VERFAHREN ZUR HERSTELLUNG VON NATRIUMCYANID**
PROCESS FOR THE PREPARATION OF SODIUIM CYANIDE
PROCÉDÉ DE FABRICATION DE CYANURE DE SODIUM

(30) Priorität: 18.06.2015 DE 102015211231
(43) Veröffentlichungstag der Anmeldung: 25.04.2018
(73) Patentinhaber: CyPlus GmbH, 63457 Hanau (DE)
(72) Erfinder: HENKEL, Jens, 98746 Meuselbach-Schwarzmühle (DE); RASSBACH, Jürgen, 99310 Arnstadt (DE); TRENKMANN, Klaus, 07407 Rudolstadt (DE)
(74) Vertreter: Kruspig, Volkmar
(86) Internationale Anmeldenummer: PCT/EP2016/062935
(87) Internationale Veröffentlichungsnummer: WO 2016/202650

(56) Entgegenhaltungen:
- CN-B- 102 502 708
- US-A- 4 083 935
- US-A- 4 847 062

## Beschreibung

Die vorliegende Erfindung betrifft ein Verfahren zur Herstellung von Alkalimetallcyaniden als Feststoff.

Alkalimetallcyanide haben zahlreiche Anwendungen. Ein besonderes wichtiges Anwendungsgebiet ist der Einsatz zur Gewinnung von Gold, Silber und anderen Metallen in der Cyanidlaugerei. Andere Anwendungsgebiete sind die Galvanotechnik sowie das Härten von Stahl. Auch als Ausgangsstoff in der chemischen Synthese finden Alkalimetallcyanide zahlreiche Anwendungen. Ein Beispiel ist hier der Einsatz zur Synthese von Nitrilen, die vielfältige Anwendung in der chemischen Industrie findet. Ein technisch besonders wichtiges Alkalimetallcyanid ist das Natriumcyanid.

Ein wichtiges Verfahren zur Herstellung von Alkalimetallcyaniden nutzt die Reaktion von Cyanwasserstoff HCN (Blausäure) mit Alkalimetallhydroxiden. Zur industriellen Herstellung von HCN als Ausgangssubstanz für diese Synthese von Alkalimetallcyaniden sind im Stand der Technik eine Reihe von Verfahren beschrieben. Ein besonders häufig eingesetztes Verfahren ist das sogenannte Andrussow-Verfahren. Beim Andrussow-Verfahren erfolgt die Herstellung von HCN durch katalysierte Reaktion von Methan, Ammoniak und Luftsauerstoff. Typischerweise wird dabei ein Gemisch von Ammoniak und Methan an Platin-Netzen unter Einblasen von Sauerstoff bei hohen Temperaturen zur Reaktion gebracht. Das durch das Andrussow-Verfahren hergestellte unmittelbare Synthese Produkt stellt dabei eine Mischung von mehreren Komponenten dar, wobei neben dem erwünschten Reaktionsprodukt HCN insbesondere unreagierter Ammoniak, Wasserstoff, Stickstoff und Kohlenoxide vorliegen.

Gemäß dem im Stand der Technik beschriebenen Verfahren zur Herstellung von Alkalimetallcyaniden wird in der Regel so vorgegangen, dass das HCN-haltige Reaktionsgas nach der Reaktion durch Abkühlen verflüssigt und anschließend die Blausäure aufgereinigt wird. Hierzu sind aufwendige Reinigungsverfahren, wie beispielsweise eine Rektifikation, notwendig. Die so aufgereinigte flüssige Blausäure wird dann gemäß diesem Verfahren aus dem Stand der Technik mit Alkalimetallhydroxid, typischerweise Natriumhydroxid, zur Reaktion gebracht, um Natriumcyanid zu erhalten. Wenn das Natriumcyanid als Feststoff hergestellt werden soll, so muss in einem weiteren Schritt eine Kristallisation erfolgen. Um möglichst wenig cyanidhaltige Abfälle zu erzeugen, kann die Natriumcanyid Mutterlauge nach der Kristallisation in den Reaktionsbehälter, in dem die verflüssigte Blausäure mit Natriumhydroxid zur Reaktion gebracht wird, rückgeführt werden. Diese Vorgehensweise führt jedoch gemäß dem im Stand der Technik beschriebenen Verfahren nicht zu einem geschlossenen Kreislauf, da sich im Verlauf von mehreren Rückführungszyklen Nebenprodukte, wie Beispielsweise Natriumformiat anreichern, sodass nach einer gewissen Zeit die Natriumcyanid Mutterlauge nicht mehr rückgeführt werden kann. Die so durch Nebenprodukte verunreinigte Natriumcyanid Mutterlauge muss dann kostenaufwendig und umweltbelastend entsorgt werden.

Diese Entsorgung ist besonders aufwendig, da Natriumcyanid und andere Alkalimetallcyanide hochgiftig sind. In der Regel erfolgt die Entsorgung durch Zugabe von Wasserstoffperoxid, wobei das Natriumcyanid zu Natriumcyanat oxidiert wird. Unter Umständen sind noch weitere Schritte erforderlich, bevor eine endgültige Entsorgung der entgifteten Abwässer erfolgen kann. Dies führt zu einem hohen Kostenaufwand.

Es sind auch alternative Ausführungsformen im Stand der Technik beschrieben, bei denen das Andrussow-Reaktionsgas als solches mit einer Natriumhydroxidlösung zur Reaktion gebracht werden um Natriumcyanid herzustellen. Diese Prozessführung ist bislang nur in wenigen Fällen verwirklicht worden und wurde bislang ausschließlich verwendet, um die Natriumcyanidlösung, die aus der Reaktion des blausäurehaltigen Gases mit dem Natriumhydroxid entsteht als Endprodukt direkt zu vertreiben. Eine Verfahrensführung, bei der das Andrussow-Reaktionsgas in der Gasphase mit Natriumhydroxid zur Reaktion gebracht wird und als Endprodukt festes Natriumcanyid erzeugt wurde, wurde bisher nicht verwirklicht. Der Grund dafür, dass eine solche Reaktionsführung bislang im Stand der Technik eher selten verwirklicht wurde, ist vor allem in der Schwierigkeit im Hinblick auf die Verunreinigung der Natriumcyanid Mutterlauge zu sehen. Durch die direkte Reaktion des Andrussow-Reaktionsgases in der Gasphase mit dem Natriumhydroxid entstehen Nebenprodukte, die sich bei der Kristallisation des Natriumcyanids entweder als Verunreinigung mit abscheiden oder aber als Verunreinigung in der Natriumcyanid Mutterlauge verbleiben. Diese Verunreinigungen, die in der Natriumcanyid Mutterlauge verbleiben, führen dazu, dass eine Rückführung der Natriumcanyid Mutterlauge nur in äußerst begrenztem Umfang möglich ist, das eine solche Rückführung zu der immer weiteren Anreicherung der Nebenprodukte führen würde. Besonders störend sind die Nebenprodukte Natriumformiat und Natriumcarbonat, die sich bei einer solchen Rückführung immer stärker anreichern. Dies würde eine ständige Entsorgung der Natriumcyanid Mutterlauge notwendig machen, was zu einer geringen Ausbeute des Prozesses, zu hohen Kosten und zu einer nicht-vertretbaren Umweltbelastung führen würde.

Die US4847062A offenbart die Herstellung wasserfreier Natriumcyanidkristalle durch die direkte Neutralisation von Natriumhydroxid mit unreinem Cyanwasserstoffgas, das Kohlendioxid enthält, gefolgt von der Kristallisation und Trennung der Kristalle.

Vor diesem Hintergrund lag der vorliegenden Erfindung die Aufgabe zugrunde, ein Verfahren zur Herstellung von Alkalimetallcyaniden als Feststoff bereitzustellen, das die oben geschilderten Nachteile vermeidet.

Insbesondere lag der vorliegenden Erfindung die Aufgabe zugrunde, ein Verfahren zu Herstellung von Alkalimetallcyaniden bereitzustellen, dass die Herstellung von Alkalimetallcyaniden als Feststoffe in möglichst wenigen Verfahrensschritten erlaubt, und gleichzeitig möglichst wenig Abfall erzeugt, der aufwendig entsorgt werden müsste.

Die erfindungsgemäße Aufgabe wird durch ein Verfahren zur Herstellung von Alkalimetallcyaniden als Feststoff gelöst, das die folgenden Schritte umfasst:
i) einen Absorptionsschritt in Form einer Absorption von Cyanwasserstoff aus einem Cyanwasserstoffhaltigem Synthesegases in einer wässrigen Alkalimetallhydroxidlösung mit einem Gehalt an freiem Alkali von 2 bis 10 Gewichts-%, in einem Absorber bei einer
   Temperatur von etwa 35°C bis 75°C, vorzugsweise zwischen 45°C und 60°C unmittelbar hinter der Einspeisestelle des Synthesegases und einem Druck von etwa 1120 bis 1600mbar (a) zur Herstellung einer wässrigen Alkalimetallcyanidlösung;
ii) einen Kristallisationsschritt in Form des Einbringens der Alkalimetallcyanidlösung in einen evaporativen Kristallisator, der durch Dampfbeheizung so beheizt wird, dass an der Kontaktfläche des Heizelementes zu der Alkalimetallcyanidlösung eine Temperatur von etwa 60 - 100°C, vorzugsweise etwa 70 - 90°C vorliegt, und in dem ein Druck von etwa 30 - 100 mbar (a), vorzugsweise 60 - 65 mbar vorliegt;
iii) einen Trennschritt in Form der Abtrennung der gebildeten Alkalimetallcyanidkristalle von der Mutterlauge durch zentrifugieren insbesondere mittels diskontinuierlich arbeitender Schälzentrifugen;
iv) einen Rückführungsschritt in Form der Rückführung von X Vol% der im Schritt iii) abgetrennten Mutterlauge in die Absorption und der Rückführung von (100-X) Vol-% der in Schritt iii) abgetrennten Mutterlage in die Kristallisation gemäß Schritt ii);
v) einen Trockenschritt in Form des Trocknens der in Schritt iii) abgetrennten Alkalimetallcyanidkristallen wobei der Trockenschritt insbesondere so ausgebildet ist, dass die abgetrennten Alkalimetallcyanidkristalle mittels eines nachgeschalteten Kontaktrockners getrocknet werden und der Trocknungsgrad der Alkalimetallcyanidkristalle von Charge zu Charge individuell eingestellt werden kann.

Ein ganz wesentlicher Schritt des erfindungsgemäßen Verfahrens ist die teilweise Rückführung der Alkalicyanid Mutterlauge in den Absorptionsprozess also den Schritt der Reaktion des cyanwasserstoffhaltigen Synthesegases mit der Alkalimetallhydroxidlösung. Der verbleibende Anteil der im Trennschritt iii) abgetrennten Mutterlauge wird dabei in die Kristallisation gemäß Schritt ii) rückgeführt.

Insgesamt erfolgt also eine vollständige Rückführung der im Trennschrittes iii) abgetrennten Mutterlauge, wobei der Anteil X Vol-% in den Absorptionsschritt i)

rückgeführt wird und der verbleibende Anteil (100 - X) Vol-% in den Kristallisationsschritt ii) rückgeführt wird. Überraschend hat sich gezeigt, dass durch diese geteilte Art der Rückführung der in Schritt iii) erhaltenen Mutterlauge, im synergistischen Zusammenwirken mit weiteren Merkmalen des erfindungsgemäßen Verfahrens, ein vollständig geschlossener Kreislauf erreicht werden kann, bei dem keine alkalimetallcyanidhaltige Mutterlauge entsorgt werden muss.

Von besonderer Bedeutung ist dabei die erfindungsgemäße Einstellung der Parameter im Kristallisationsschritt ii).

Grundsätzlich gilt dabei, dass durch steigende Temperatur während des Kristallisationsschrittes im evaporativem Kristallisator die Bildung von Nebenprodukten, insbesondere in Form von Alkalimetallformiaten begünstigt wird. Unter diesem Gesichtspunkt sollte also möglichst kalt gearbeitet werden. Problematisch ist hier jedoch, dass sich bei tiefen Temperaturen sehr kleine Alkalimetallcyanidkristalle bilden, die im Trennschritt iii) nur sehr schwer abtrennbar sind. Durch das erfindungsgemäße Zusammenspiel der Beheizung im Kristallisationsschritt durch Dampfbeheizung in der Art, dass an der Kontaktfläche des Heizelementes zu der Alkalimetallcyanidlösung eine Temperatur von etwa 60 - 100°C, vorzugsweise etwa 70 - 90°C vorliegt mit einer Vakuumerzeugung im Kristallisationsschritt, sodass ein Druck von etwa 30 - 100 mbar, vorzugsweise 60 - 65mbar vorliegt, gelingt es, die Bildung von Nebenprodukten insbesondere in Form von Formiaten hinreichend zu unterdrücken und gleichzeitig gute Kristallgrößen zu erreichen.

Die Aufheizung der Kristallisationslösung in Schritt ii) erfolgt dabei typischerweise durch einen Rohrbündelwärmeaustauscher, der auf der Mantelseite mit Dampf beheizt ist. Dabei wird vorzugsweise Vakuumdampf eingesetzt, sodass Temperaturen von etwa 70 - 100°C, typischerweise etwa 70 - 90°C erreicht werden. Durch diese niedrigen Temperaturen kann die Bildung von Nebenprodukten, insbesondere in Form von Formiaten, weitgehend unterdrückt werden.

Durch das Zusammenspiel dieser Verfahrensparameter in Bezug auf die Beheizung mit der Vakuumerzeugung bei der ein Druck von etwa 30 - 100 mbar, vorzugsweise etwa 60 - 65 mbar vorliegt, werden auf der einen Seite hinreichende Kristallgrößen erreicht. Gewünscht sind Kristallgrößen von etwa 100 - 120 µm. Dadurch wird ein nahezu vollständiges Abtrennen der auskristallisierten Alkalimetallcyanide aus der Kristallisationslösung möglich.

Gleichzeitig kann die Bildung von Nebenprodukten, insbesondere in Form von Formiaten, so weitgehend unterdrückt werden, dass im Zusammenspiel mit der erfindungsgemäßen Vorgehensweise der teilweisen Rückführung der in Schritt iii) abgetrennten Mutterlauge in die Absorption (Schritt i)) und Rückführung des verbleibenden Teil der Mutterlauge in die Kristallisation (Schritt ii)) es so erstmals möglich wird, einen geschlossenen Kreislauf der Alkalimetallcyanidlösung herzustellen. Das erfindungsgemäße Verfahren ermöglicht somit die Herstellung von Alkalimetallcyanid als Feststoff in guter Qualität mit nur geringen Verunreinigungen, wobei gleichzeitig keine alkalimetallcyanidhaltigen Abwässer entstehen, die kostenaufwendig und umweltbelastend entsorgt werden müssten.

In einer besonders bevorzugten Ausführungsform wird durch das erfindungsgemäße Verfahren ein Alkalimetallcyanid in Form von Natriumcyanid hergestellt. Dabei wird in Schritt i) als Alkalimetallhydroxidlösung Natriumhydroxid (Natronlauge) eingesetzt.

Ein weiterer Vorteil des erfindungsgemäßen Verfahrens ist, dass in Schritt i) das cyanwasserstoffhaltige Synthesegas als nicht aufgereinigtes Gasgemisch unmittelbar aus einem Andrussow-Prozess eingesetzt werden kann. Durch die erfindungsgemäße Verfahrensführung wird es möglich, das in einem Andrussow-Prozess gebildete HCN-haltige Gasgemisch ohne jeden zwischengeschalteten Aufreinigungsschritt direkt mit der Alkalimetallhydroxidlösung zur Reaktion zu bringen.

In einer besonders bevorzugten Ausführungsform weisen die in Schritt iii) gebildeten Alkalimetallcyanidkristalle eine Korngrößenverteilung mit Kristallgrößen d50 von etwa 50 - 200, insbesondere etwa 100 - 120 µm auf.

Als besonders vorteilhaft hat es sich auch erwiesen, dass die Abtrennung der gebildeten Alkalimetallcyanidkristalle in Schritt iii) bei einer Feststoffkonzentration von etwa 5 - 40 Ma%, insbesondere etwa 10 - 30 Ma% erfolgt.

Als besonders vorteilhaft hat es sich erwiesen, wenn im Rückführungsschritt iv) die Rückführung so erfolgt, dass der prozentuale Anteil X Vol-%, der im Schritt iii) abgetrennten Mutterlauge, der in die Absorption (Schritt i)) rückgeführt wird, etwa 5-40 Vol-%, insbesondere etwa 10 - 20 Vol-% beträgt. Dementsprechend beträgt der Anteil (1 - X) Vol-% der in Schritt iii) abgetrennten Mutterlauge, der in die Kristallisation (Schritt ii)) rückgeführt wird, vorteilhafterweise etwa 60 - 95 Vol-% insbesondere etwa 80 - 90 Vol-%.

In einer besonders bevorzugten Ausführungsform ist das erfindungsgemäße Verfahren so gestaltet, dass die Schritte i), ii), iii) und iv) in Bezug auf die in Schritt iii) abgetrennte Mutterlauge einen geschlossenen Kreislauf darstellen, bei dem über zahlreiche Verfahrenszyklen kleine alkalimetallcyanidhaltige Mutterlauge verworfen werden muss.

Um eine Verfahrensführung zu ermöglichen, die das Alkalimetallcyanid als Feststoff in möglichst hoher Ausbeute und möglichst hoher Reinheit zugänglich macht, wird in Schritt i) vorzugsweise das Alkalimetallhydroxid kontinuierlich gemessen und geregelt, damit immer die optimale Konzentration des Alkalimetallhydroxids vorliegt. Durch diese kontinuierliche Messung und Regelung ist es möglich, dem Gehalt an freiem Alkalimetallhydroxid in der Lösung stets im gewünschten Bereich von etwa 2 - 10 Gew.-% zu halten.

In einer bevorzugten Ausführungsform erfolgt der Trockenschritt v) des Trocknens der in Schritt iii) abgetrennten Alkalimetallcyanidkristalle so, dass die Trocknung in einem Kontakttrockner mit Zwangsumwälzung bei einer Temperatur des Heizmediums von etwa 180 - 400°C, vorzugsweise etwa 185 - 250°C erfolgt.

Besonders gute Ergebnisse werden dabei erzielt, wenn die in Schritt iii) abgetrennten Alkalimetallcyanidkristalle vor dem Trockenschritt v) einen vorgeschalteten Vorheizer durchlaufen und dabei gleichzeitig eine Vergleichmäßigung des diskontinuierlichen Produktstromes zwischen den Schälzentrifugen und dem Kontakttrockner erreicht wird.

Das Zusammenspiel von Trockner und Vorheizer wird dabei vorzugsweise so gestaltet, dass Trockner und Vorheizer mit einem vorgewärmten Luftstrom dergestalt gespült werden, dass eine gezielte Luftführung von außen nach innen und von trocken nach feucht erfolgt.

Ein weiterer besonderer Vorteil des erfindungsgemäßen Verfahrens besteht darin, dass in Schritt i) ein cyanidwasserstoffhaltiges Synthesegas eingesetzt werden kann, zu dessen Herstellung Erdgas mit einem Methangehalt von etwa 98 Ma% ohne besondere Vorreinigung für den Andrussow-Prozess eingesetzt werden kann. Auch das Reaktionsprodukt des Andrussow-Prozesses aus einem so eingesetzten Erdgas mit einem Methangehalt von etwa 98 Ma% erzeugt wurde, kann ohne Zwischenreinigungsschritte unmittelbar zur Absorption in Schritt i) eingesetzt werden.

In einer bevorzugten Ausführungsform des erfindungsgemäßen Verfahrens folgt dem Schritt v) ein weiterer Schritt vi) in Form eines Zerkleinerungsschrittes, wobei zur Zerkleinerung von Kontaktierungen des Alkalimetallcyanidkristallstromes aus Schritt v) eine Einstellung der maximalen Größe von etwa 10 mm zur Optimierung der nachfolgenden Brikettierung erfolgt.

Ferner offenbart wird auch ein Alkalimetallcyanid, insbesondere in Form von Natriumcyanid, das nach dem erfindungsgemäßen Verfahren hergestellt ist.

Das erfindungsgemäße Verfahren weist gegenüber den bisherigen Verfahren zur Herstellung von Alkalimetallcyaniden zahlreiche Vorteile auf. Gegenüber bisherigen Verfahren zur Herstellung von Alkalimetallcyaniden als Feststoff wird es durch das erfindungsgemäße Verfahren möglich, das cyanwasserstoffhaltige Synthesegas ohne jeden Kondensations- und Aufreinigungsschritt direkt mit der Alkalimetallhydroxidlösung zur Reaktion zu bringen. Dies führt zu einer wesentlich einfacheren Verfahrensführung und zum Einsparen von Kosten. Dennoch kann durch das erfindungsgemäße Verfahren Alkalimetallcyanid als Feststoff in guter Qualität mit nur geringen Verunreinigungen hergestellt werden. Gleichzeitig wird es durch das synergistische Zusammenwirken der Verfahrensparameter gemäß dem erfindungsgemäßen Verfahren möglich, einen geschlossenen Kreislauf der nach dem abgetrennten Schritt erhaltenen alkalimetallcyanidhaltigen Mutterlauge zu schaffen, bei dem keine oder nur wenig alkalimetallcyanidhaltige Abwässer entstehen, die kostenaufwendig und umweltbelastend entsorgt werden müssen.

## Patentansprüche

1. Verfahren zur Herstellung von Alkalimetallcyaniden als Feststoff, umfassend die Schritte:
i) einen Absorptionsschritt in Form einer Absorption von Cyanwasserstoff aus einem Cyanwasserstoffhaltigem Synthesegases in einer wässrigen Alkalimetallhydroxidlösung mit einem Gehalt an freiem Alkali von 2 bis 10 Gewichts-%, in einem Absorber bei einer Temperatur von 35°C bis 75°C, vorzugsweise zwischen 45°C und 60°C unmittelbar hinter der Einspeisestelle des Synthesegases und einem Druck von 1120 bis 1600mbar (a) zur Herstellung einer wässrigen Alkalimetallcyanidlösung;
ii) einen Kristallisationsschritt in Form des Einbringens der Alkalimetallcyanidlösung in einen evaporativen Kristallisator, der durch Beheizung, insbesondere durch Dampfbeheizung so beheizt wird, dass an der Kontaktfläche des Heizelementes zu der Alkalimetallcyanidlösung eine Temperatur von 60 - 100°C, vorzugsweise 70 - 90°C vorliegt, und in dem ein Druck von 30 - 100 mbar (a), vorzugsweise 60 - 65 mbar vorliegt;
iii) einen Trennschritt in Form der Abtrennung der gebildeten Alkalimetallcyanidkristalle von der Mutterlauge durch zentrifugieren;
iv) einen Rückführungsschritt in Form der Rückführung von X Vol% der im Schritt iii) abgetrennten Mutterlauge in die Absorption und der Rückführung von (100-X) Vol-% der in Schritt iii) abgetrennten Mutterlage in die Kristallisation gemäß Schritt ii);
v) einen Trockenschritt in Form des Trocknens der in Schritt iii) abgetrennten Alkalimetallcyanidkristallen wobei der Trockenschritt insbesondere so ausgebildet ist, dass die abgetrennten Alkalimetallcyanidkristalle mittels eines nachgeschalteten Kontaktrockners getrocknet werden und der Trocknungsgrad der Alkalimetallcyanidkristalle von Charge zu Charge individuell eingestellt werden kann.

2. Verfahren nach Anspruch 1,
**dadurch gekennzeichnet, dass** als Alkalimetallcyanid Natriumcyanid gebildet wird.

3. Verfahren nach Anspruch 1 oder 2,
**dadurch gekennzeichnet, dass** als Cyanwasserstoffsynthesegas ein nicht aufgereinigtes Gasgemisch aus einem Andrussow-Prozess eingesetzt wird.

4. Verfahren nach mindestens einem der vorhergehenden Ansprüche,
**dadurch gekennzeichnet, dass** die in Schritt iii) gebildeten Alkalimetallcyanidkristalle eine Korngrößenverteilungen mit Kristallgrößen d50 von 50 - 200, insbesondere 100 - 120 µm aufweisen.

5. Verfahren nach mindestens einem der vorhergehenden Ansprüche, **dadurch gekennzeichnet, dass** in Schritt iii) die Abtrennung der gebildeten Alkalimetallcyanidkristalle bei einer Feststoffkonzentration von 5 - 40 Ma% insbesondere 10 - 30 Ma% erfolgt.

6. Verfahren nach mindestens einem der vorhergehenden Ansprüche,
**dadurch gekennzeichnet, dass** in Schritt iv) der prozentuale Anteil X Vol-% 5 bis 40 Vol-%, insbesondere 10 bis 20 Vol-% beträgt.

7. Verfahren nach mindestens einem der vorhergehenden
Ansprüche, **dadurch gekennzeichnet, dass** die Schritte i), ii), iii) und iv) in Bezug auf die in Schritt iii) abgetrennte Mutterlauge einen geschlossenen Kreislauf darstellen.

8. Verfahren nach mindestens einem der vorhergehenden Ansprüche,
**dadurch gekennzeichnet, dass** die Konzentration an freiem Alkalihydroxid in der Absorption (Schritt i) kontinuierlich gemessen und geregelt wird.

9. Verfahren nach mindestens einem der vorhergehenden Ansprüche,
**dadurch gekennzeichnet, dass** die in Schritt iii) abgetrennten Alkalimetallcyanidkristalle in Schritt v) getrocknet werden, wobei die Trocknung in einem Kontakttrockner mit Zwangsumwälzung bei einer Temperatur des Heizmediums von 180 bis 400°C, vorzugsweise 185 bis 250°C erfolgt.

10. Verfahren nach mindestens einem der vorhergehenden
Ansprüche, **dadurch gekennzeichnet, dass** die in Schritt iii) abgetrennten Alkalimetallcyanidkristalle einen der Trocknung vorgeschalteten Vorheizer durchlaufen und gleichzeitig eine Vergleichmäßigung des diskontinuierlichen Produktstromes zwischen den Schälzentrifugen und dem Kontakttrockner erreicht wird.

11. Verfahren nach mindestens einem der vorhergehenden
Ansprüche, **dadurch gekennzeichnet, dass** Trockner und Vorheizer mit einem vorgewärmten Luftstrom dergestalt gespült werden, dass eine gezielte Luftführung von außen nach innen und von trocken nach feucht erfolgt.

12. Verfahren nach mindestens einem der vorhergehenden
Ansprüche, **dadurch gekennzeichnet, dass** in Schritt i) ein Cyanidwasserstoffhaltiges Synthesegas eingesetzt wird, zu dessen Herstellung Erdgas mit einem Methangehalt etwa 98 Ma% ohne besondere Vorreinigung für den Andrussow-Prozess und damit zur Herstellung eines cyanidwasserstoffhaltigen Synthesegases eingesetzt wurde.

13. Verfahren nach mindestens einem der vorhergehenden
Ansprüche, **dadurch gekennzeichnet, dass** nach Schritt v) ein weiterer Schritt vi) in Form eines Zerkleinerungsschrittes erfolgt, wobei zur Zerkleinerung von Kompaktierungen des Alkalimetallcyanidkristallstromes aus Schritt v) eine Einstellung der maximalen Größe von etwa 10 mm zur Optimierung einer nachfolgendenden
Brikettierung erfolgt.

14. Verfahren gemäß mindestens einem der vorhergehenden Ansprüche,
**dadurch gekennzeichnet, dass** das Verfahren iii) einen Trennschritt in Form der Abtrennung der gebildeten Alkalimetallcyanidkristalle von der Mutterlauge durch Zentrifugieren mittels diskontinuierlich arbeitender Schälzentrifugen umfasst.

## Claims

1. A method for the preparation of alkali metal cyanides as a solid matter, comprising the steps:
i) an absorption step in the form of an absorption of hydrogen cyanide from a hydrogen cyanide containing synthesis gas in an aqueous alkali metal hydroxide solution having a content of free alkali from 2 to 10 % by weight in an absorber at a temperature of 35°C to 75°C, preferably of between 45°C and 60°C, immediately behind the feeding point of the synthesis gas, and a pressure of 1120 to 1600 mbar (a) for the preparation of an aqueous alkali metal cyanide solution;
ii) a crystallization step in the form of introducing the alkali metal cyanide solution into an evaporative crystallizer which is heated by heating, in particular by vapor heating, such that, at the contact surface of the heating element to the alkali metal cyanide solution, a temperature of 60 to 100°C, preferably 70 to 90°C is present, and in which a pressure of 30 to 100 mbar (a), preferably 60 to 65 mbar is present;
iii) a separation step in the form of separating the formed alkali metal cyanide crystals from the mother liquor by centrifuging;
iv) a return step in the form of returning X % by volume of the mother liquor separated in step iii) into the absorption and returning (100 - X) % by volume of the mother liquor separated in step iii) into the crystallization according to step ii);
v) a drying step in the form of drying the alkali metal cyanide crystals separated in step iii), wherein the drying step is in particular designed such that the separated alkali metal cyanide crystals are dried by means of a downstream contact dryer and the drying degree of the alkali metal cyanide crystals can be set individually from batch to batch.

2. The method according to claim 1,
**characterized in that** sodium cyanide is formed as the alkali metal cyanide.

3. The method according to claim 1 or 2,
**characterized in that** a non-purified gas mixture from an Andrussow method is used as the hydrogen cyanide synthesis gas.

4. The method according to at least one of the preceding claims,
**characterized in that** the alkali metal cyanide crystals formed in step iii) have grain size distributions with crystal sizes d50 from 50 to 200 µm, in particular 100 to 120 µm.

5. The method according to at least one of the preceding claims,
**characterized in that** in step iii), the separation of the formed alkali metal cyanide crystals is performed at a solid concentration from 5 to 40 Ma%, in particular 10 to 30 Ma%.

6. The method according to at least one of the preceding claims,
**characterized in that** in step iv), the percentage X % by volume amounts to 5 to 40 % by volume, in particular 10 to 20 % by volume.

7. The method according to at least one of the preceding claims,
**characterized in that** the steps i), ii), iii) and iv) represent a closed circuit with respect to the mother liquor separated in step iii).

8. The method according to at least one of the preceding claims,
**characterized in that** the concentration of free alkali hydroxide is continuously measured and controlled in the absorption (step i).

9. The method according to at least one of the preceding claims,
**characterized in that** the alkali metal cyanide crystals separated in step iii) are dried in step v), wherein the drying is performed in a contact dryer having a forced circulation at a temperature of the heating medium of 180 to 400°C, preferably 185 to 250°C.

10. The method according to at least one of the preceding claims,
**characterized in that** the alkali metal cyanide crystals separated in step iii) pass through a pre-heater upstream of the drying, and simultaneously, a homogenization of the discontinuous product flow is achieved between the peeler centrifuges and the contact dryer.

11. The method according to at least one of the preceding claims,
**characterized in that** the dryer and the pre-heater are rinsed by means of a preheated air flow such that a targeted air routing from outside to inside and from dry to humid is performed.

12. The method according to at least one of the preceding claims,
**characterized in that** in step i), a hydrogen cyanide containing synthesis gas is used, to the preparation of which natural gas having a methane content of about 98 Ma% has been used without particular preliminary cleaning for the Andrussow method and thus for the preparation of a hydrogen cyanide containing synthesis gas.

13. The method according to at least one of the preceding claims,
**characterized in that**, after step v), a further step vi) is carried out in the form of a comminution step, wherein for comminution of compactions of the alkali metal cyanide crystal stream from step v) an adjustment of the maximum size of about 10 mm is carried out to optimize the subsequent briquetting.

14. The method according to at least one of the preceding claims,
**characterized in that** the method comprises iii) a separation step in the form of separating the formed alkali metal cyanide crystals from the mother liquor by centrifuging by means of discontinuously acting peeler centrifuges.

## Revendications

1. Procédé de production de cyanures de métaux alcalins sous forme de matière solide, comprenant les étapes suivantes :
i) une étape d'absorption sous la forme d'une absorption de cyanure d'hydrogène provenant d'un gaz de synthèse contenant du cyanure d'hydrogène dans une solution aqueuse d'hydroxyde de métal alcalin ayant une teneur en alcali libre de 2 à 10 % en poids dans un absorbeur à une température de 35 °C à 75 °C, de préférence entre 45 °C et 60 °C immédiatement en aval du point d'injection du gaz de synthèse et à une pression de 1120 à 1600 mbar (a) pour produire une solution aqueuse de cyanure de métal alcalin ;
ii) une étape de cristallisation sous la forme de l'introduction de la solution de cyanure de métal alcalin dans un cristalliseur à évaporation qui est chauffé par chauffage, en particulier par chauffage à la vapeur, de telle sorte qu'une température de 60 à 100 °C, de préférence de 70 à 90 °C, soit présente à la surface de contact de l'élément chauffant avec la solution de cyanure de métal alcalin, et dans laquelle une pression de 30 à 100 mbar (a), de préférence de 60 à 65 mbar, est présente ;
iii) une étape de séparation sous la forme de la séparation des cristaux de cyanure de métal alcalin de la liqueur mère par centrifugation ;
iv) une étape de renvoi sous la forme du renvoi de X % en volume de la liqueur mère séparée à l'étape iii) à l'absorption et du renvoi de (100-X) % en volume de la liqueur mère séparée à l'étape iii) à la cristallisation selon l'étape ii) ;
v) une étape de séchage sous la forme du séchage des cristaux de cyanure de métal alcalin séparés à l'étape iii), l'étape de séchage étant en particulier conçue de manière à ce que les cristaux de cyanure de métal alcalin séparés soient séchés au moyen d'un séchoir à contact placé en aval et que le degré de séchage des cristaux de cyanure de métal alcalin puisse être réglé individuellement d'un lot à l'autre.

2. Procédé selon la revendication 1, **caractérisé en ce que** le cyanure de métal alcalin formé est du cyanure de sodium.

3. Procédé selon la revendication 1 ou 2, **caractérisé en ce que** le gaz de synthèse de cyanure d'hydrogène utilisé est un mélange de gaz non purifié provenant d'un processus Andrussow.

4. Procédé selon au moins l'une des revendications précédentes, **caractérisé en ce que** les cristaux de cyanure de métal alcalin formés à l'étape iii) présentent une distribution granulométrique avec des tailles de cristaux d50 de 50 à 200, en particulier de 100 à 120 µm.

5. Procédé selon au moins l'une des revendications précédentes, **caractérisé en ce qu'**à l'étape iii), la séparation des cristaux de cyanure de métal alcalin formés a lieu à une concentration en matière solide de 5 à 40 % en masse, en particulier de 10 à 30 % en masse.

6. Procédé selon au moins l'une des revendications précédentes, **caractérisé en ce qu'**à l'étape iv), le pourcentage X % en volume est de 5 à 40 % en volume, en particulier de 10 à 20 % en volume.

7. Procédé selon au moins l'une des revendications précédentes, **caractérisé en ce que** les étapes i), ii), iii) et iv) représentent un circuit fermé en ce qui concerne la liqueur mère séparée à l'étape iii).

8. Procédé selon au moins l'une des revendications précédentes, **caractérisé en ce que** la concentration en hydroxyde alcalin libre dans l'absorption (étape i) est mesurée et régulée en continu.

9. Procédé selon au moins l'une des revendications précédentes, **caractérisé en ce que** les cristaux de cyanure de métal alcalin séparés à l'étape iii) sont séchés à l'étape v), le séchage étant effectué dans un séchoir à contact à circulation forcée à une température du milieu chauffant de 180 à 400 °C, de préférence de 185 à 250 °C.

10. Procédé selon au moins l'une des revendications précédentes, **caractérisé en ce que** les cristaux de cyanure de métal alcalin séparés à l'étape iii) traversent un préchauffeur placé en amont du séchage et, en même temps, une uniformisation du flux de produit discontinu entre les centrifugeuses à racleur et le séchoir à contact est obtenue.

11. Procédé selon au moins l'une des revendications précédentes, **caractérisé en ce que** le séchoir et le préchauffeur sont rincés avec un flux d'air préchauffé de telle manière qu'une circulation d'air ciblée se produit de l'extérieur vers l'intérieur et du sec vers l'humide.

12. Procédé selon au moins l'une des revendications précédentes, **caractérisé en ce qu'**à l'étape i), on utilise un gaz de synthèse contenant du cyanure d'hydrogène, pour la production duquel on a utilisé du gaz naturel ayant une teneur en méthane d'environ 98 % en masse sans purification préalable particulière pour le processus Andrussow et donc pour la production d'un gaz de synthèse contenant du cyanure d'hydrogène.

13. Procédé selon au moins l'une des revendications précédentes, **caractérisé en ce qu'**après l'étape v), une autre étape vi) sous la forme d'une étape de broyage est exécutée, dans laquelle, pour broyer des compactages du flux de cristaux de cyanure de métal alcalin de l'étape v), on effectue un réglage de la taille maximale d'environ 10 mm pour optimiser un briquetage ultérieur.

14. Procédé selon au moins l'une des revendications précédentes, **caractérisé en ce que** le procédé iii) comprend une étape de séparation sous la forme de la séparation des cristaux de cyanure de métal alcalin formés de la liqueur mère par centrifugation au moyen de centrifugeuses à racleur fonctionnant de manière discontinue.
